(19) Europäisches Patentamt
European Patent Office
Office européen des brevets

(11) **EP 1 179 966 B1**

(12) **FASCICULE DE BREVET EUROPEEN**

(45) Date de publication et mention
de la délivrance du brevet:
**30.05.2007 Bulletin 2007/22**

(51) Int Cl.:
*H04Q 11/04* (2006.01)        *H04Q 3/62* (2006.01)
*H04M 3/38* (2006.01)

(21) Numéro de dépôt: **01401550.7**

(22) Date de dépôt: **14.06.2001**

(54) **Procédé pour assurer une possibilite d'obtention de communications déterminées de manière privilégiée pour certains des usagers d'un réseau de communication**

Verfahren um eine Möglichkeit der Erlangung bestimmter Kommunikationen für einige der Benutzer eines Kommunikationsnetzes bevorzugt zu gewährleisten

A method for ensuring a possibility of obtaining given communications in a privileged way for some of the users of a communication network

(84) Etats contractants désignés:
**AT BE CH CY DE DK ES FI FR GB GR IE IT LI LU MC NL PT SE TR**

(30) Priorité: **10.08.2000 FR 0010528**

(43) Date de publication de la demande:
**13.02.2002 Bulletin 2002/07**

(73) Titulaire: **Alcatel Lucent**
**75008 Paris (FR)**

(72) Inventeurs:
• **Messsager, André**
**94600 Choisy le Roi (FR)**

• **Phan, Cao Thanh**
**92500 Rueil Malmaison (FR)**

(74) Mandataire: **Sciaux, Edmond et al**
**Alcatel Lucent**
**Intellectual Property & Standards**
**54 rue La Boétie**
**75008 Paris (FR)**

(56) Documents cités:
**US-A- 5 745 694            US-A- 5 933 485**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention concerne un procédé destiné à assurer une possibilité d'obtention de communications déterminées de manière privilégiée pour certains des usagers d'un réseau de communication.

Pour différentes raisons, il est couramment prévu la possibilité de donner une priorité à certains des usagers d'un réseau de communication pour l'obtention d'une ou de plusieurs communications déterminée(s), afin que ces abonnés privilégiés puissent obtenir ces communications dans les meilleurs conditions possibles, en particulier lorsque le trafic écoulé par le réseau correspond à un niveau de charge tel qu'une obtention normale de ces communications ne pourrait autrement être garantie.

Une solution connue pour obtenir une forte disponibilité d'un réseau de communication pour de tels usagers est de leur attribuer des circuits de manière permanente, une paire d'usagers privilégiés disposant d'un circuit qui leur est constamment réservé au niveau des artères, entre noeuds de commutation du réseau, empruntées pour interconnecter ces usagers. Chaque circuit est, en l'occurrence, constitué, selon un chemin ou l'un des chemins possibles entre les noeuds de commutation auxquels se rattachent les usagers considérés. Ce chemin se compose, soit d'un segment réservé parmi ceux qui coexistent au niveau d'une artère, soit de plusieurs segments réservés qui sont choisis chacun au niveau d'une des artères par l'intermédiaire duquel le chemin choisi s'établit et qui sont mis en série par des noeuds de commutation du réseau auxquels aboutissent les artères dont ces segments font partie. Une telle réservation permanente d'un circuit est une solution coûteuse qui n'est le plus généralement mise en oeuvre que pour un nombre limité de couples d'usagers privilégiés au niveau d'un réseau donné. Elle n'est pas optimale, en particulier lorsque les circuits réservés pour les usagers privilégiés ne sont pas utilisés par ces derniers et que le trafic relatif aux autres usagers se trouve fortement freiné en raison du niveau d'occupation d'une artère incluant ces segments réservés.

Une autre solution connue évite les inconvénients qu'occasionne une telle réservation permanente de circuits pour des usagers privilégiés. Elle consiste à prévoir de couper une communication établie entre des usagers qui ne sont pas privilégiés, si les conditions sont telles qu'il n'est pas possible d'établir autrement un circuit permettant à des usagers privilégiés de communiquer entre eux. Cette solution est nettement moins pénalisante, lorsque la capacité du réseau est suffisamment importante pour écouler le trafic dans de bonnes conditions et que le recours au droit de préemption au profit d'usagers privilégiés n'a normalement pas à être exercé et peut donc être considéré comme une possibilité de recours en cas de difficulté. Par contre cette solution n'est pas satisfaisante, s'il s'avère que ce droit de préemption a besoin d'être exercé, car elle implique l'interruption d'une communication établie entre des usagers, sans que ceux-ci ne l'aient demandée.

L'invention propose donc un procédé pour procurer une possibilité d'obtention de communications déterminées entre usagers, d'une manière privilégiée par réservation de segments de circuit, pour certains des usagers d'un réseau de communication, dans le cas où ces communications déterminées s'établissent par l'intermédiaire d'au moins deux noeuds de commutation que le réseau comporte. Le procédé, selon l'invention, est destiné à être mis en oeuvre dans le cadre d'un réseau constitué pour que chaque communication, demandée par un usager au moyen d'un terminal, soit établie par l'intermédiaire d'un circuit permettant de relier ce terminal au terminal d'un usager qu'il appelle. Un tel circuit y est composé d'un ou de plusieurs segments de circuit mis en série, lorsqu'il s'établit par l'intermédiaire de plusieurs noeuds de commutation du réseau. Chaque segment est sélectionné parmi les segments de circuit disponibles au niveau d'une artère de liaison prévue entre deux noeuds de commutation, pour que soit obtenue la constitution du circuit permettant à l'usager appelant et à l'abonné appelé de communiquer.

Selon une caractéristique de l'invention, le procédé comporte les opérations suivantes :

- une réservation permanente d'au moins un segment de circuit au niveau de chacune des artères de liaison entre noeuds qui sont nécessaires à l'établissement des circuits pour chacune des communications déterminées entre usagers pour lesquelles il a été prévu qu'un privilège soit accordé à au moins un usager déterminé parmi les deux usagers concernés ;

- une allocation dynamique de segments de circuit qui sont sélectionnés parmi les segments réservés et qui sont nécessaires à l'établissement d'un circuit à partir du terminal d'un des usagers privilégiés pour au moins une communication déterminée, en cas de demande d'établissement par un de ces usagers privilégiés d'une communication pour laquelle un privilège lui est accordé.

Selon une forme de mise en oeuvre du procédé, tel que défini ci-dessus, il est prévu d'affecter un attribut de privilège à chacun des abonnés, cet attribut, correspondant à une indication de catégorie particulière dans le cas des usagers privilégiés, étant inclus dans l'identifiant d'usager appelant qui est transmis pour l'établissement d'un circuit, lors d'une demande de mise en communication.

Selon l'invention, il est prévu un algorithme de coût minimal, exploité pour le choix d'un circuit lors d'une demande de mise en communication, qui privilégie le choix du circuit le plus court s'établissant par l'intermédiaire de segments de circuit réservés, lorsque la demande émane d'un usager disposant d'un privilège relatif à la communication alors demandée, et qui assure l'emprunt d'un segment de circuit non réservé d'une artère, en cas d'indisponibilité du ou des segments réservés de cette artère, si celle-ci comporte alors au moins un tel segment non réservé disponible.

L'invention a aussi pour objet un réseau de communication comportant des noeuds de commutation reliés entre eux, en point à point, par des artères permettant de mettre en communication des usagers disposant de terminaux de communication individuellement rattachés chacun à un des noeuds, chaque communication y étant obtenue par l'intermédiaire d'un circuit établi entre les noeuds d'usagers mis en liaison par un segment de circuit au niveau de chacune des artères empruntées. Selon l'invention, ce réseau comporte des moyens matériels et/ou logiciels prévus pour assurer la mise en oeuvre du procédé tel que défini ci-dessus.

L'invention, ses caractéristiques et ses avantages sont précisés dans la description qui suit en liaison avec les figures évoquées ci-dessous.

La figure 1 est un schéma de principe relatif à un réseau de communication.

La figure 2 est un schéma de principe relatif à une artère de liaison entre noeuds.

La figure 3 est un schéma de principe montrant divers possibilités de circuit dans le cadre du réseau illustré sur la figure 1.

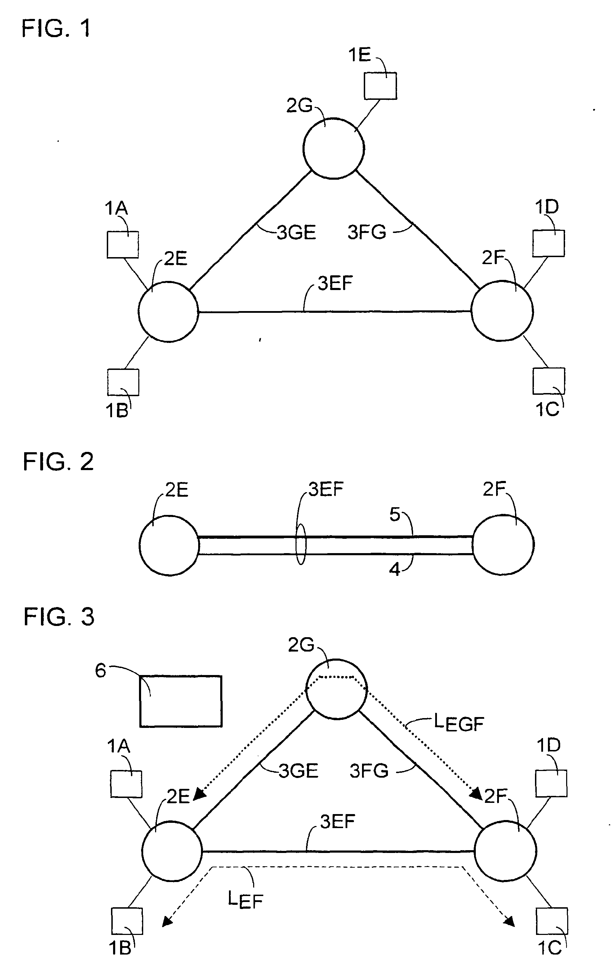

Le procédé selon l'invention est destiné à être mis en oeuvre dans un réseau de communication prévus pour permettre à des usagers de ce réseau de communiquer entre eux, lorsque ces usagers disposent de terminaux de communication, tels 1A, 1B, 1C, 1D et 1E sur la figure 1, qui autorisent chacun à demander l'établissement d'un circuit le mettant en liaison avec un terminal d'un autre des divers usagers pour une communication. De manière connue, le circuit, permettant de mettre en liaison un usager appelant avec un usager qu'il appelle, est susceptible d'être composé d'un ou de plusieurs segments de circuit mis en série, suivant le chemin à suivre entre eux au travers du réseau et dès que l'établissement de ce circuit doit s'effectuer par l'intermédiaire d'au moins deux des noeuds de commutation du réseau, tels 2E, 2F, 2G. Comme connu un noeud de commutation permet de mettre sélectivement en liaison des terminaux d'usager et/ou des segments de circuit entre eux.

Les noeuds de commutation sont supposés reliés entre eux en point à point par des artères, telles 3EF, 3FG et 3GE. Chaque artère permet l'établissement et la coexistence d'une pluralité de segments de circuit en parallèle entre les noeuds de commutation où elle aboutit.

Chaque segment de circuit est susceptible de se relier en série, soit avec un autre segment de circuit appartenant à une artère différente de la sienne, soit avec un terminal d'usager, au niveau de chacun des noeuds de commutation où il aboutit. Il est l'un des éléments qui permet la constitution d'un circuit par lequel les terminaux respectifs de deux usagers se relient.

Dans l'exemple présenté sur la figure 1 il est supposé que le réseau de communication schématisé comporte trois noeuds de commutation reliés deux à deux par les artères dont les références ont été données plus haut. Il y est prévu que certains des usagers puissent obtenir l'établissement de communications déterminées de manière privilégiée par rapport aux autres usagers du réseau, en particulier lorsque le trafic écoulé par une des artères à emprunter est d'un niveau tel que la mise en communication ne serait pas nécessairement établie de manière immédiate, si l'usager demandeur était un usager ordinaire.

Comme évoqué ci-dessus, l'établissement d'un circuit entre un terminal de communication d'un usager appelant, par exemple le terminal 1A, et un terminal de communication d'un usager qui est appelé, par exemple le terminal 1E, s'effectue par l'intermédiaire d'au moins un segment de circuit à partir du moment où l'usager appelant et l'usager appelé ne sont pas rattachés à un même centre de commutation du réseau. Dans le cas des terminaux 1A et 1E envisagés ci-dessus, l'établissement d'un circuit peut s'effectuer soit par l'intermédiaire d'un segment de circuit de l'artère 3GE unissant les noeuds de commutation 2E et 2G auxquels sont respectivement supposés rattachés ces terminaux, soit encore par l'intermédiaire de deux segments de circuit qui sont mis en série par le noeud de commutation 2F et qui ont été respectivement sélectionnés l'un au niveau de l'artère 3EF unissant les noeuds 2E, 2F, l'autre au niveau de l'artère 3FG unissant les noeuds 2F, 2G. Comme il est connu, le choix de l'un ou l'autre des chemins qui correspondent à ces deux possibilités de circuit entre le terminal 1A et le terminal 1E est classiquement effectué en tenant compte de facteurs de sélection déterminés et notamment des coûts respectifs d'établissement d'une communication par chacun des chemins envisageables, lorsqu'un tel choix est possible. En effet, un tel choix n'est envisageable qu'à partir du moment où les trafics respectivement écoulés par les artères concernées n'atteint pas un niveau d'occupation conduisant à une indisponibilité temporaire de la totalité des circuits d'une des artères pour l'établissement d'une nouvelle communication.

Il peut se produire des situations où il n'est temporairement plus possible à un usager d'entrer en communication avec un autre usager, lorsque les artères qui peuvent permettre de les mettre en communication ne permettent plus d'établir un circuit entre ces deux usagers du fait de l'absence de segments de circuit disponibles sur une partie du ou de chacun des chemins qui sont susceptibles d'être suivis pour l'établissement de cette communication.

Ceci a conduit à la solution connue, évoquée plus haut, selon laquelle il est effectué une réservation permanente d'un circuit entre deux usagers que ceux-ci soient ou non en communication, pour que ces usagers puissent se mettre en liaison entre eux dès qu'ils le désirent à partir du moment où chacun d'eux est en une position qui lui permet de répondre à une demande provenant de l'autre.

Selon l'invention, il est prévu de procurer une possibilité d'obtention d'au moins une communication déterminée, de manière privilégiée, entre deux usagers pour au moins un de ces deux usagers, via leurs terminaux de communication respectifs.

A cet effet, il est prévu d'effectuer une réservation permanente d'au moins un segment de circuit au niveau de chacune des artères de liaison entre noeuds qui sont nécessaires pour l'établissement des circuits pour chacune des communications déterminées entre usagers pour lesquelles il a été prévu qu'un privilège soit accordé à au moins un usager déterminé parmi les deux usagers concernés. Chaque artère et par exemple l'artère 3EF est alors organisée de manière que les ressources qu'elle offre en matière de segments de circuit parallèles entre les noeuds de commutation 2E et 2F où elle aboutit soit divisée en deux. Dans l'exemple envisagée une partie, symbolisée par une liaison 4 sur la figure 2, est composée par "m" des "n" segments prévus au niveau de l'artère 3EF. Elle est constituée de segments dont l'exploitation n'est possible que par des utilisateurs disposant d'un privilège leur permettant d'établir une communication prédéterminée, dont le circuit implique l'utilisation d'un segment de l'artère 3EF. Les autres usagers se partagent les "n-m" segments de l'artère 3EF qui ne sont pas réservés aux usagers privilégiés, la partie regroupant ces "n-m" segments étant symbolisée par une liaison 5 sur la figure 2. Les nombres n et m sont supposés être des entiers positifs, "n" étant par exemple égal à 30, le nombre correspondant à "m" est habituellement choisi très inférieur à "n".

Dans une forme de mise en oeuvre du procédé, selon l'invention, il est donc prévu d'attribuer une indication de catégorie particulière contenant un attribut privilège aux divers usagers d'un réseau de communication pour permettre de différencier parmi ces usagers, ceux dont l'attribut privilège traduit le fait qu'il leur a été attribué une priorité pour l'obtention d'un circuit permettant d'établir une communication déterminée, de ceux auxquels une telle priorité n'a pas été accordée. Cet attribut est ici supposé associé à l'identifiant d'usager appelant qui est transmis le long du chemin permettant de joindre le noeud de commutation auquel est rattaché cet usager appelant au noeud de commutation auquel est rattaché l'usager qu'il appelle, lors de l'établissement du circuit qui doit leur permettre de communiquer.

Comme il est connu, un tel établissement de circuit est réalisé au niveau d'un ensemble logique de routage du réseau de communication qui est représenté par une logique programmée 6 sur la figure 3, cette logique pouvant être constituée de différentes manières et par exemple d'une ou de plusieurs unités de traitement centralisées du réseau et/ou réparties, notamment au niveau des noeuds de commutation.

L'établissement d'un circuit à partir d'un usager pour une communication est obtenu par mise en oeuvre d'une métrique prenant en compte les ressources disponibles pour lui. Dans le cas d'un usager demandant une communication pour laquelle il n'a pas de privilège attribué, il est prévu la prise en compte des seules ressources pour lesquelles aucun privilège n'a été accordé. Tel est par exemple le cas pour un usager utilisant un terminal 1A rattaché à un noeud de commutation 2E lorsqu'il choisit d'établir une communication avec un autre usager disposant d'un terminal 1 D, sans qu'un privilège n'ait été prévu au profit de ces deux usagers pour cette communication.

La logique 6 détermine alors en fonction de la programmation qui lui a été fournie quel est le chemin qui présente le moindre coût pour établir un circuit entre ces deux abonnés 1A et 1D, en exploitant les ressources pour lesquelles aucun privilège n'a été attribué. Dans l'exemple envisagé, le choix est à effectuer entre un circuit constitué d'un élément d'artère 3EF qui est disponible et qui n'est pas réservé à des utilisateurs privilégiés et un circuit constitué par la mise en série d'un élément de l'artère 3GE et d'un élément d'artère 3FG qui sont l'un et l'autre disponibles et non réservés à des usagers privilégiés.

Selon l'invention, cette logique 6 est de plus programmée pour déterminer, au moyen d'un algorithme, le chemin qui présente le moindre coût pour les demandes d'établissement de circuit provenant d'un usager lorsqu'il souhaite établir une communication déterminée pour laquelle il a un privilège qui lui a été préalablement accordé.

Ce coût $C_{res}$ peut être représenté en fonction des ressources réservées $R_r$, ainsi que des ressources normales $R_n$ par la formule :

$$C_{res} = \textbf{MIN} \ \{\textbf{F}(R_r), \textbf{F}(R_n)\}$$

dans lequel **F** est une fonction décroissante et où la fonction **MIN** avantage les chemins les plus courts en nombre de franchissement de noeuds.

Ce coût $C_{res}$ est calculé, par exemple, dans le cas d'un usager, utilisant un terminal tel que 1B, qui dispose d'un privilège relatif à une communication prédéterminée, par laquelle il est mis en liaison avec un usager prédéterminé au travers d'un terminal 1D lui aussi prédéterminé.

Selon le schéma présenté sur la figure 3, le terminal 1B et le terminal 1D peuvent être reliés par un circuit composé, soit en un seul saut par un des segments de circuit propre à l'artère 3EF, comme symbolisé par la liaison $L_{EF}$, soit alternativement en deux sauts par deux segments respectivement choisis l'un au niveau de l'artère 3GE et l'autre au niveau de l'artère 3FG, ces deux segments étant mis en série au travers du noeud 2G, comme symbolisé par la liaison $L_{EGF}$.

Le choix entre les chemins possibles entre les terminaux 1B et 1D pour une communication par un usager donné implique initialement de déterminer si cet usager dispose ou non d'un privilège lui permettant d'établir un circuit empruntant des segments réservés aux usagers privilégiés pour la communication qu'il demande.

Si tel est le cas, il est prévu que l'algorithme de coût cherche prioritairement le chemin comportant le moins possible de sauts et donc de segments de circuit en série entre les noeuds de rattachement respectifs de l'usager appelant et de l'usager appelé, en utilisant préférentiellement des segments de circuit réservés aux usagers privilégiés, si l'usager appelant est privilégié et s'il établit une communication pour laquelle il a un privilège enregistré. Si l'on suppose, à titre d'exemple, que l'usager du terminal 1B tente d'établir une communication avec l'usager 1D pour laquelle il dispose d'un privilège, le chemin choisi s'établira par l'intermédiaire d'un segment de circuit réservé de l'artère 3EF, s'il existe un tel segment disponible sur cette artère. Ce chemin sera par contre établi via un segment de circuit non réservé de cette même artère, si les segments réservés sont indisponibles, alors qu'il existe des segments de circuit non réservés alors disponibles. Par ailleurs, il est prévu d'exploiter les possibilités de traitement prévues au niveau du réseau en cas de saturation d'une artère pour l'ensemble des usagers, dans le cas où un abonné privilégié est mis en face d'une telle situation de saturation, à l'occasion d'une demande de communication.

Le procédé selon l'invention est donc agencé pour permettre de ménager et de gérer dynamiquement un ensemble de segments de circuit réservés sur les différentes artères qu'il comporte en fonction des demandes des usagers disposant de privilèges déterminés enregistrés au niveau du réseau et par exemple au niveau de l'unité traitant du routage au niveau de leurs noeuds de rattachement respectifs. Il prévoit la propagation des attributs de privilège affectés aux différents usagers dans les messages d'établissement de communication à l'origine desquels sont ces usagers.

**Revendications**

1. Procédé pour procurer une possibilité d'obtention de communications déterminées entre usagers, d'une manière privilégiée par réservation de segments de circuit, pour certains des usagers d'un réseau de communication, dans le cas où ces communications déterminées s'établissent par l'intermédiaire d'au moins deux noeuds de commutation (2E, 2F, 2G) que le réseau comporte, dans le cadre d'un réseau constitué pour que chaque communication, demandée par un usager au moyen d'un terminal (1A à 1E), soit établie par l'intermédiaire d'un circuit permettant de relier ce terminal au terminal d'un usager qu'il appelle, ce circuit étant composé d'un ou de plusieurs segments de circuit mis en série, lorsqu'il s'établit par l'intermédiaire de plusieurs noeuds de commutation du réseau, chaque segment étant sélectionné parmi les segments de circuit disponibles au niveau d'une artère de liaison (3EF, 3FG ou 3GE) prévue entre deux noeuds de commutation, pour que soit obtenue la constitution du circuit permettant à l'usager appelant et à l'abonné appelé de communiquer, le procédé étant **caractérisé en ce qu'**il comporte les opérations suivantes :

- une réservation permanente d'au moins un segment de circuit au niveau de chacune des artères de liaison entre noeuds qui sont nécessaires à l'établissement des circuits pour chacune des communications déterminées entre usagers pour lesquelles il a été prévu qu'un privilège soit accordé à au moins un usager déterminé parmi les deux usagers concernés ;
- une allocation dynamique de segments de circuit qui sont sélectionnés parmi les segments réservés et qui sont nécessaires à l'établissement d'un circuit à partir du terminal d'un des usagers qui disposent de privilèges pour des communication déterminées, en cas de demande d'établissement par un de ces usagers d'une communication pour laquelle un privilège lui est accordé.

2. Procédé, selon la revendication 1, dans lequel il est prévu d'affecter un attribut de privilège à chacun des abonnés, cet attribut, correspondant à une indication de catégorie particulière dans le cas des usagers privilégiés, étant inclus dans l'identifiant d'usager appelant qui est transmis pour l'établissement d'un circuit, lors d'une demande de mise en communication.

3. Procédé selon la revendication 1, dans lequel un algorithme de coût minimal, exploité pour le choix d'un circuit lors d'une demande de mise en communication, privilégie le choix du circuit le plus court s'établissant par l'intermédiaire d'un ou de plusieurs segments de circuit réservés en série, lorsque la demande émane d'un usager disposant d'un privilège relatif à la communication alors demandée, et assure l'emprunt d'un segment de circuit non réservé d'une artère, en cas d'indisponibilité du ou des segments réservés de cette artère, lorsque celle-ci comporte alors au moins un tel segment non réservé disponible.

4. Procédé, selon l'une des revendications 1 à 3, dans lequel il est prévu d'exploiter les possibilités de traitement prévues au niveau du réseau pour l'ensemble des usagers, en cas de saturation d'une artère concernant une communication pour laquelle un abonné dispose d'un privilège.

5. Réseau de communication comportant des noeuds de commutation (2E, 2F, 2G) reliés entre eux, en point à point, par des artères (3EF, 3FG ou 3GE) permettant de mettre en communication des usagers disposant de terminaux de communication (1A à 1E) individuellement rattachés chacun à un des noeuds, chaque communication y étant obtenue par l'intermédiaire d'un circuit établi entre les noeuds d'usagers mis en liaison par un segment de circuit au niveau de chacune des artères empruntées, **caractérisé en ce qu'**il comporte des moyens matériels et/ou logiciels prévus pour assurer la mise en oeuvre du procédé selon au moins l'une des revendications 1 à 4.

**Claims**

1. Method of providing the facility of obtaining particular calls between users in a preferential manner by reserving circuit segments for some users of a communication network in the event that said particular calls are established via at least two switching nodes (2E, 2F, 2G) of the network, in the context of a network constituted so that each call requested by a user via a terminal (1A to 1E) is set up via a circuit for connecting said terminal to the terminal of a called user, said circuit comprising one circuit segment or a plurality of circuit segments connected in series, when said call is set up via a plurality of switching nodes of the network, each segment being selected from available circuit segments on a trunk (3EF, 3FG or 3GE) between two switching nodes so that a circuit is set up enabling the calling user and the called user to communicate, the method being **characterised in that** it includes the following operations:

   - permanently reserving at least one circuit segment on each trunk between nodes needed to set up circuits for each of the particular calls between users for which a preferred user attribute has been granted to at least one particular user of the two users concerned, and
   - dynamically allocating circuit segments selected from the reserved segments and needed to set up a circuit from the terminal of one user who has a preferred user attribute for particular calls in the event of a call set-up request by one of said users in respect of a call for which he has been granted a preferred user attribute.

2. Method according to claim 1, wherein a preferred user attribute is assigned to each user and corresponds to a particular category indication in the case of preferred users included in the calling user identifier that is transmitted for setting up a circuit at the time of a call request.

3. Method according to claim 1, wherein a minimum-cost algorithm used to choose a circuit at the time of a call request gives priority to choosing the shortest circuit set up via one or more reserved circuit segments in series when the request emanates from a user who has a preferred user attribute relating to the call requested and uses an unreserved circuit segment of a trunk if no reserved segments of said trunk are available and said trunk has at least one unreserved segment available at the time.

4. Method according to any of claims 1 to 3, wherein processing capabilities of the network are used for all users in the event of saturation of a trunk concerning a call for which a user has a preferred user attribute.

5. Communication network including switching nodes (2E, 2F, 2G) with point-to-point connections provided by trunks (3EF, 3FG, 3GE) enabling users to communicate who have communication terminals (1A to 1E) each individually connected to one of the nodes, each call being obtained by means of a circuit set up between the nodes of users connected by a circuit segment in each trunk used, which communication network is **characterised in that** it includes hardware and/or software for implementing the method according to at least one of claims 1 to 4.

**Patentansprüche**

1. Verfahren, um eine Möglichkeit zur bevorzugten Erlangung bestimmter Kommunikationen zwischen Benutzern durch Reservierung von Leitungsabschnitten für einige Benutzer eines Kommunikationsnetzes zu schaffen, für den Fall, dass diese bestimmten Kommunikationen über mindestens zwei zu dem Netz gehörende Vermittlungsknoten (2E, 2F, 2G) aufgebaut werden, und zwar im Rahmen eines Netzes, das so aufgebaut ist, dass für jede Kommunikation, die von einem Benutzer mittels eines Endgerätes (1A bis 1E) angefordert wird, eine Leitung aufgebaut wird, welche die Verbindung dieses Endgerätes mit dem Endgerät eines Benutzers, den er anruft, ermöglicht, wobei sich diese Leitung aus einem oder mehreren Leitungsabschnitten zusammensetzt, die in Reihe geschaltet werden, wenn diese Leitung über mehrere Vermittlungsknoten des Netzes aufgebaut wird, wobei jeder Abschnitt unter den verfügbaren Leitungsabschnitten in einem zwischen zwei Vermittlungsknoten vorgesehenen Hauptverbindungsleitweg (3EF, 3FG oder 3GE) so gewählt wird, dass die Herstellung der Leitung erlangt wird, die dem anrufenden Benutzer und dem angerufenen Teilnehmer ermöglicht, [miteinander] zu kommunizieren, wobei das Verfahren **dadurch gekennzeichnet ist, dass** es die folgenden Schritte umfasst:

   - eine dauerhafte Reservierung von mindestens einem Leitungsabschnitt in jedem der Hauptverbindungsleitwege zwischen Knoten, die zum Aufbau der Leitungen für jede der bestimmten Kommunikationen zwischen Benutzern benötigt werden, für welche vorgesehen wurde, dass ein Vorrecht mindestens einem bestimmten Benutzer der beiden betroffenen Benutzer gewährt werden soll;

- eine dynamische Zuweisung der Leitungsabschnitte, die aus den reservierten Abschnitten ausgewählt werden und die zum Aufbau einer Leitung ausgehend vom Endgerät eines der bevorzugten Benutzer für mindestens eine bestimmte Kommunikation für den Fall benötigt werden, dass einer dieser bevorzugten Benutzer den Aufbau einer Kommunikation anfordert, für welche ihm ein Vorrecht gewährt wurde.

2. Verfahren nach Anspruch 1, bei dem vorgesehen ist, jedem der Teilnehmer ein Vorrechtsattribut zuzuweisen, wobei dieses Attribut, das einer bestimmten Kategorieangabe im Fall von bevorzugten Benutzern entspricht, in der Kennung des anrufenden Benutzers enthalten ist, die für den Aufbau einer Leitung bei der Anforderung zur Herstellung der Kommunikation übertragen wird.

3. Verfahren nach Anspruch 1, bei dem ein Algorithmus zur Ermittlung der Minimalkosten, der für die Auswahl einer Leitung bei der Anforderung zur Herstellung der Kommunikation eingesetzt wird, die Wahl der kürzesten Leitung bevorzugt, die über einen oder mehrere in Reihe geschaltete reservierte Leitungsabschnitte aufgebaut wird, wenn die Anforderung von einem Benutzer ausgeht, der über ein Vorrecht im Zusammenhang mit der dann angeforderten Kommunikation verfügt, und der gewährleistet, dass ein nicht reservierter Leitungsabschnitt eines Hauptleitwegs verwendet wird, falls einer oder mehrere reservierte Abschnitte dieses Hauptleitwegs nicht verfügbar sind, sofern dieser [Hauptleitweg] dann mindestens einen solchen nicht reservierten verfügbaren Abschnitt umfasst.

4. Verfahren nach einem der Ansprüche 1 bis 3, bei dem vorgesehen ist, die auf der Ebene des Netzes vorgesehenen Verarbeitungsmöglichkeiten für sämtliche Benutzer zu nutzen, und zwar im Fall der Sättigung eines Hauptleitwegs, der eine Kommunikation betrifft, für die ein Teilnehmer über ein Vorrecht verfügt.

5. Kommunikationsnetz, umfassend Vermittlungsknoten (2E, 2F, 2G), die untereinander von Punkt zu Punkt durch Hauptleitwege (3EF, 3FG, 3GE) verbunden sind, welche die Herstellung einer Kommunikation zwischen Benutzern ermöglichen, die über Kommunikationsendgeräte (1A bis 1 E) verfügen, die jeweils einzeln an einen der Knoten angeschlossen sind, wobei jede Kommunikation dort über eine Leitung erlangt wird, die zwischen den Benutzerknoten aufgebaut wird, deren Verbindung über einen Leitungsabschnitt in jedem der verwendeten Hauptleitungswege hergestellt wird, **dadurch gekennzeichnet, dass** dieses Netz Hardware- und/oder Softwareeinrichtungen umfasst, die dafür vorgesehen sind, das Verfahren nach mindestens einem der Ansprüche 1 bis 4 umzusetzen.

FIG. 1

FIG. 2

FIG. 3